# DEMANDE DE BREVET EUROPEEN

(11) **EP 4 840 699 A1**
(43) Date de publication de la demande: **18.11.2026**
(21) Numéro de dépôt: 26171448.9
(22) Date de dépôt: 09.04.2026
(51) Int. Cl.: B60Q 3/64, F21V 8/00

(54) **GUIDE DE LUMIÈRE À EXTRÉMITÉ OPACIFIÉE POUR ÉCLAIRAGE AUTOMOBILE**

(30) Priorité: 16.05.2025 FR 2505266
(71) Demandeur: Stellantis Auto SAS, 78300 Poissy (FR)
(72) Inventeur: MENABEUF, GILLES, 90170 ETUEFFONT (FR); STEINMETZ, JEAN YVES, 90160 BESSONCOURT (FR); TAZI, ACHRAF, 20402 CASABLANCA (MA)
(74) Mandataire: BCIP

(57) **Abrégé**

L'invention concerne un guide de lumière à extrémité opacifiée pour éclairage automobile.

Le guide de lumière (2) comprend une extrémité libre recouverte par un matériau opaque. Le matériau opaque peut former un capuchon (12) enchâssé sur l'extrémité libre. L'extrémité libre (4) peut comporter une rainure annulaire remplie par le matériau opaque, créant un bouton d'extrémité relié au guide par une portion rétrécie. Cette configuration permet d'obtenir un arrêt net du flux lumineux, d'éliminer les points chauds par rétrodiffusion et de supprimer les fuites de lumière. Le matériau opaque peut être un polymère thermoplastique teinté ou une résine thermodurcissable opacifiée. L'invention trouve application dans les systèmes d'éclairage d'ambiance automobile.

## Description

### Domaine technique auquel se rapporte l'invention

La présente invention concerne le domaine des équipements d'éclairage pour véhicules automobiles, et plus particulièrement les dispositifs d'éclairage d'ambiance pour l'habitacle des véhicules automobiles. Elle se rapporte plus spécifiquement aux guides de lumière utilisés dans les systèmes d'éclairage d'ambiance.

### Arrière-plan technologique

Les systèmes d'éclairage d'ambiance sont de plus en plus utilisés dans les véhicules automobiles, notamment dans les véhicules électriques, où ils constituent un élément important de l'ambiance intérieure. Ces systèmes d'éclairage comprennent généralement une ou plusieurs sources lumineuses, typiquement des diodes électroluminescentes, associées à un guide de lumière pour assurer la diffusion d'un faisceau lumineux le long d'un parcours défini. Un support permet d'intégrer ces composants dans l'architecture du véhicule automobile. Un diffuseur complète généralement l'ensemble pour garantir un rendu lumineux homogène et esthétique.

Dans les solutions conventionnelles, l'extrémité du guide de lumière est généralement coupée perpendiculairement à sa direction principale. Cette approche présente plusieurs inconvénients.

Un premier inconvénient concerne l'absence de coupure nette du flux lumineux à l'extrémité du guide. En effet, même avec une extrémité coupée à angle droit, la lumière continue à se diffuser de manière non contrôlée, créant des zones de transition lumineuse indésirables qui nuisent à l'esthétique recherchée.

Un autre inconvénient est la formation de points chauds par rétrodiffusion. Lorsque la lumière atteint l'extrémité du guide, une partie est réfléchie vers l'intérieur du guide, créant des zones de surintensité lumineuse locale. Ces points chauds sont particulièrement visibles et dégradent significativement la qualité perçue de l'éclairage d'ambiance.

Ces problèmes techniques sont particulièrement critiques dans le contexte de l'éclairage d'ambiance automobile où l'esthétique et la qualité perçue sont essentielles. L'invention vise à proposer une solution permettant de limiter de façon significative le phénomène de point chaud lumineux au niveau d'une extrémité libre d'un guide de lumière.

### Objet de l'invention

Pour cela, l'invention propose un guide de lumière pour l'éclairage de l'habitacle d'un véhicule automobile, le guide de lumière comprenant une extrémité libre.

L'invention est remarquable en ce que l'extrémité libre du guide de lumière est recouverte par un matériau opaque.

La présence du matériau opaque à l'extrémité du guide de lumière permet d'absorber efficacement les rayons lumineux atteignant l'extrémité du guide, empêchant ainsi toute réflexion ou transmission parasite. Le matériau opaque agit comme une barrière optique, garantissant un arrêt net et franc du flux lumineux au niveau de l'extrémité libre du guide de lumière. Cette solution résout simultanément les problèmes techniques identifiés ci-dessus, à savoir, une coupure nette d'un flux lumineux, élimine les points chauds en absorbant la lumière qui aurait été rétrodiffusée, et supprime les fuites de lumière en créant une barrière opaque au niveau de l'extrémité libre du guide de lumière.

Selon une autre possibilité de réalisation de l'invention, le matériau opaque forme un capuchon, et le capuchon est enchâssé sur l'extrémité libre du guide de lumière. Cette configuration offre l'avantage d'une installation simple et d'une excellente tenue mécanique du matériau opaque sur le guide de lumière. Le capuchon peut être préfabriqué et assemblé sur le guide de lumière lors de sa fabrication, garantissant une qualité constante et un positionnement précis.

Selon une autre possibilité de réalisation de l'invention, l'extrémité libre du guide de lumière comporte au moins une rainure remplie ou partiellement remplie par le matériau opaque. Cette caractéristique améliore de façon significative l'ancrage mécanique du matériau opaque sur le guide de lumière.

Selon une autre possibilité de réalisation de l'invention, la rainure forme un anneau entourant l'extrémité libre du guide de lumière. Cette configuration annulaire assure un meilleur maintien du matériau opaque à l'extrémité libre du guide de lumière.

Selon une autre possibilité de réalisation de l'invention, la profondeur de la rainure est comprise entre 5% et 60% de l'épaisseur du guide de lumière. De préférence, la profondeur de la rainure est comprise entre 15% et 40% de l'épaisseur du guide de lumière, ou entre 20% et 30%. Ces plages de valeurs assurent un compromis entre la solidité mécanique du guide et l'efficacité de l'ancrage du matériau opaque à l'extrémité du guide de lumière. L'épaisseur du guide de lumière est mesurée selon une direction normale ou sensiblement normale à la direction de propagation d'un faisceau lumineux au niveau de l'extrémité libre du guide de lumière.

Selon une autre possibilité de réalisation de l'invention, la largeur de la rainure est comprise entre 5 mm et 50 mm. De préférence, la largeur de la rainure est comprise entre 10 mm et 30 mm ou entre 15 mm et 20 mm.

Selon une autre possibilité de réalisation de l'invention, la plus petite distance entre la rainure et l'extrémité libre du guide de lumière est comprise entre 10 mm et 30 mm. De préférence, cette distance est comprise entre 15 mm et 25 mm, et de manière optimale autour de 20 mm. Cette configuration favorise un recouvrement suffisant de l'extrémité libre du guide de lumière par le matériau opaque, depuis la rainure jusqu'à ladite extrémité, pour prévenir d'un phénomène de point chaud au niveau de ladite extrémité du guide de lumière.

Selon une autre possibilité de réalisation de l'invention, la rainure est comprise dans un plan perpendiculaire ou sensiblement perpendiculaire à la direction de propagation d'un faisceau lumineux au niveau de l'extrémité libre du guide de lumière. Cette orientation favorise un maintien plus aisé et plus efficace du matériau opaque dans la rainure.

Selon une autre possibilité de réalisation de l'invention, la section transversale du guide de lumière est de forme circulaire ou sensiblement circulaire au niveau de son extrémité libre. En d'autres termes, le guide de lumière a une forme cylindrique ou sensiblement cylindrique au niveau de son extrémité libre.

Selon une autre possibilité de réalisation de l'invention, le matériau opaque est un matériau absorbant la lumière, choisi parmi les polymères thermoplastiques teintés, les élastomères opacifiés, les résines thermodurcissables chargées de pigments absorbants, ou les composites à matrice polymère contenant des charges absorbantes suffisamment. Plus spécifiquement, le matériau opaque peut être du polyéthylène noir, une résine époxy opacifiée, ou une résine polyuréthane chargée de noir de carbone.

Selon une autre alternative de réalisation de l'invention, le matériau opaque peut être appliqué par un procédé de trempage (appelé « potting » en anglais) formant une goutte solidifiée autour de l'extrémité libre du guide. Cette méthode offre l'avantage de pouvoir aisément et rapidement de recouvrir l'extrémité libre d'un guide de lumière, quelle que soit la forme de ladite extrémité. Le matériau opaque peut être appliqué par trempage de l'extrémité libre du guide dans une résine liquide, apte à polymériser par la suite en une couche solide opaque à la lumière.

Selon une autre alternative de réalisation de l'invention, le matériau opaque peut être appliqué par pulvérisation ou projection sur l'extrémité libre du guide de lumière, pour créer un revêtement uniforme sur ladite extrémité. Cette technique permet un contrôle précis de l'épaisseur du revêtement et s'adapte facilement à des géométries complexes.

Selon une autre alternative de réalisation de l'invention, le guide de lumière peut comporter plusieurs rainures formant des anneaux positionnés à différentes distances de l'extrémité libre du guide de lumière. Cette configuration multirainures permet un meilleur maintien du matériau opaque à l'extrémité du guide de lumière.

Bien entendu, les différentes caractéristiques et possibilités de réalisation mentionnées précédemment peuvent être combinées afin de réaliser d'autres variantes de réalisations.

L'invention concerne également une planche de bord pour un véhicule automobile comprenant un guide de lumière tel que décrit précédemment. Cette application permet d'intégrer harmonieusement l'éclairage d'ambiance dans l'architecture intérieure du véhicule.

L'invention concerne également un véhicule automobile comprenant un guide de lumière tel que décrit précédemment. Le guide de lumière peut être utilisé non seulement dans une planche de bord d'un véhicule automobile mais aussi dans d'autres zones de l'habitacle comme les portières, la console centrale ou autre.

L'intégration du guide de lumière selon l'invention dans un véhicule automobile permet d'améliorer significativement la qualité perçue de l'éclairage d'ambiance dans l'ensemble de l'habitacle, contribuant ainsi à une expérience utilisateur améliorée et à une esthétique intérieure plus soignée.

Selon une autre alternative de réalisation de l'invention, le guide de lumière peut être utilisé dans des systèmes d'éclairage extérieur du véhicule, notamment dans des feux arrière ou des feux de jour, où le contrôle précis de l'arrêt lumineux est également crucial pour l'esthétique et la sécurité.

L'invention concerne également un procédé de fabrication d'un guide de lumière tel que décrit précédemment, caractérisé en ce qu'il met en œuvre une étape de recouvrement d'une extrémité libre d'un guide de lumière par un matériau liquide, puis une étape de solidification du matériau liquide, le matériau liquide étant opaque à la lumière lorsqu'il est à l'état solide. Ce procédé permet une production industrielle efficace avec un contrôle précis des caractéristiques optiques du produit final.

Le matériau opaque peut être appliqué par trempage de l'extrémité libre du guide dans une résine liquide, apte à polymériser par la suite en une couche solide opaque à la lumière.

Selon une alternative, le matériau opaque peut être appliqué par pulvérisation ou projection sur l'extrémité libre du guide de lumière, pour créer un revêtement uniforme sur ladite extrémité. Cette technique permet un contrôle précis de l'épaisseur du revêtement et s'adapte facilement à des géométries complexes.

L'invention présente de nombreux avantages techniques. Elle permet notamment un arrêt plus net et plus esthétique d'un flux lumineux au niveau de l'extrémité libre d'un guide de lumière, afin de réduire de façon significative le phénomène de point chaud mentionné ci-dessus, en évitant les fuites de lumière au niveau de l'extrémité libre du guide de lumière, tout en offrant une solution sure et facilement industrialisable. De plus, la flexibilité des procédés d'application décrits ci-dessus permet une adaptation à différentes géométries de guides et contraintes de production.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

### Description des figures

L'invention sera mieux comprise et d'autres caractéristiques et avantages apparaîtront plus clairement à la lecture de la description donnée ci-après à titre d'exemple purement illustratifs et non limitatifs, en référence aux dessins annexés dans lesquels :
- [Fig. 1] illustre une vue en perspective de l'extrémité libre d'un guide de lumière selon l'invention, montrant une rainure annulaire et un bouton d'extrémité formé à l'extrémité du guide de lumière ;
- [Fig. 2] illustre une vue en perspective de la même extrémité du guide de lumière avec un capuchon en matériau opaque enchâssé sur l'extrémité libre ;
- [Fig. 3] illustre une vue de face d'une planche de bord pour un véhicule automobile comprenant un guide de lumière selon l'invention.

### Description détaillée de l'invention

Pour rappel, l'invention propose une solution permettant de limiter de façon significative le phénomène de point chaud lumineux au niveau d'une extrémité libre d'un guide de lumière.

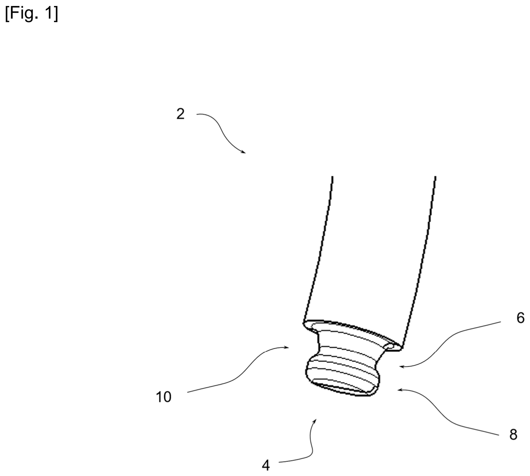

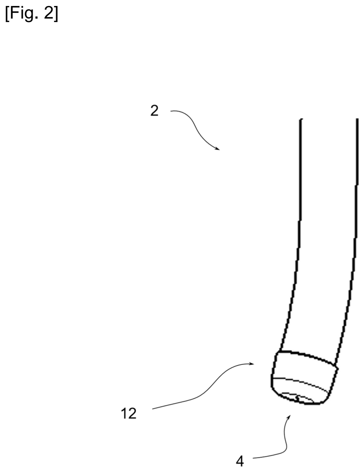

Les figures 1 et 2 illustrent un mode de réalisation non limitatif d'un guide de lumière selon l'invention. Le guide de lumière 2 partiellement représenté sur la figure 1, est destiné pour l'éclairage d'ambiance de l'habitacle d'un véhicule automobile. Le guide de lumière 2 présente une forme générale cylindrique avec un diamètre compris entre 3 mm et 10 mm. Le guide 2 est réalisé en polyméthacrylate de méthyle (PMMA) ou en polycarbonate (PC), polyamide transparent, matériaux offrant d'excellentes propriétés de transmission optique.

L'extrémité libre 4 du guide de lumière 2 est usinée pour former une configuration particulière comprenant une rainure annulaire 6. Cette rainure 6 entoure complètement le guide 2 et présente une section transversale rectangulaire ou légèrement trapézoïdale.

Selon le présent exemple, la profondeur de la rainure 6 est de comprise entre 20% et 40 % de l'épaisseur du guide. La largeur de la rainure 6 est entre 2 et 18 mm, et dimensionnée pour offrir une zone d'ancrage optimale pour un matériau recouvrant l'extrémité libre 4 du guide de lumière.

La rainure 6 est positionnée de manière à créer un bouton d'extrémité 8 à l'extrémité libre 4 du guide. Le bouton d'extrémité 8 présente un diamètre sensiblement inférieur au guide principal 2, soit 2,5 mm, et est relié au corps principal du guide par une portion cylindrique rétrécie 10 formée par l'usinage de la rainure 6. Cette portion rétrécie 10 présente un diamètre d'environ 3 mm. La distance entre le bord de la rainure 6 et l'extrémité libre du guide est de 20 mm.

Comme illustré par la figure 2, un capuchon 12 est enchâssé sur l'extrémité libre 4 du guide de lumière. Le capuchon 12 est réalisé à partir d'un matériau opaque au faisceau lumineux destiné à se propager dans le guide de lumière.

Selon le présent exemple, le capuchon 12 est réalisé en polyéthylène noir. Le capuchon 12 présente une cavité interne dont la forme correspond précisément à la géométrie de l'extrémité libre 4 du guide, incluant le bouton d'extrémité 8 et la portion rétrécie 10. L'épaisseur de paroi du capuchon 12 est d'environ 2 mm, suffisante pour garantir une absorption d'un faisceau lumineux se propageant dans le guide de lumière.

Le procédé d'enchâssement du capuchon 12 sur le guide 2 s'effectue par emmanchement à force. Pour ce faire, le capuchon 12 peut être légèrement chauffé afin d'accroître son élasticité, et ainsi permettre un enchâssement plus aisé sur l'extrémité libre du guide de lumière. Le refroidissement ultérieur du capuchon assure un serrage permanent et une étanchéité optique parfaite.

Dans une variante de réalisation, le procédé de fabrication utilise un recouvrement par trempage. Le guide de lumière 2 est maintenu verticalement par un dispositif de positionnement précis. Son extrémité libre 4 est plongée dans un bain de résine époxy/polyuréthane liquide contenant des pigments noirs absorbants. La profondeur d'immersion est contrôlée pour que la résine remplisse complètement la rainure 6 et forme une goutte enveloppante autour du bouton d'extrémité 8. Après retrait du bain, la résine est polymérisée par exposition UV pendant une durée déterminée de quelques secondes ou par passage dans une étuve à une température et durée déterminé, par exemple de l'ordre de 120°C pendant environ 10 minutes. L'épaisseur finale du revêtement est d'environ 1,5 mm.

Le fonctionnement du guide de lumière illustré par la figure 2 est le suivant : les rayons lumineux se propageant dans le guide 2 par réflexion totale interne atteignent progressivement la zone de la rainure 6. La présence du matériau opaque dans la rainure crée une première zone d'absorption qui capture une partie significative de la lumière. Les rayons résiduels continuant vers le bouton d'extrémité 8 sont ensuite totalement absorbés par le capuchon 12 ou le revêtement de résine. Cette absorption en deux étapes garantit l'élimination complète des points chauds et des fuites lumineuses.

Les dimensions et proportions décrites peuvent être adaptées en fonction du diamètre spécifique du guide de lumière utilisé, les rapports dimensionnels restant constants pour maintenir les performances optiques optimales.

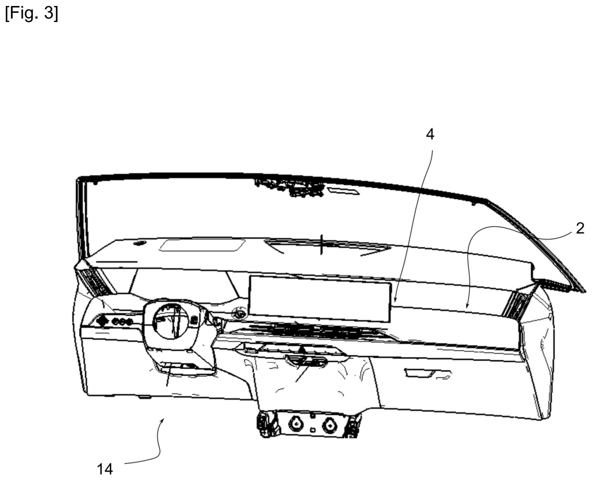

La [Fig. 3] illustre un exemple d'utilisation non limitatif d'un guide de lumière 2 selon l'invention, présent dans une planche de bord 14 d'un véhicule automobile, afin de permettre une limite d'éclairage d'ambiance plus net et plus précis au niveau de l'extrémité libre 4 du guide de lumière.

### Liste des signes de référence :

2 : guide de lumière
4 : extrémité libre du guide de lumière
6 : rainure annulaire
8 : bouton d'extrémité
10 : portion cylindrique rétrécie
12 : capuchon en matériau opaque
14 : planche de bord d'un véhicule automobile

## Revendications

1. Guide de lumière (2) pour l'éclairage de l'habitacle d'un véhicule automobile, le guide de lumière (2) comprenant une extrémité libre (4), **caractérisé en ce que** l'extrémité libre (4) du guide de lumière (2) est recouverte par un matériau opaque.

2. Guide de lumière selon la revendication 1, **caractérisé en ce que** le matériau opaque forme un capuchon (12), et **en ce que** le capuchon (12) est enchâssé sur l'extrémité libre (4) du guide de lumière (2).

3. Guide de lumière selon la revendication 1 ou 2, **caractérisé en ce que** l'extrémité libre (4) du guide de lumière (2) comporte au moins une rainure (6) remplie ou partiellement remplie par le matériau opaque.

4. Guide de lumière selon la revendication 3, **caractérisé en ce que** la rainure (6) forme un anneau entourant l'extrémité libre (4) du guide de lumière (2).

5. Guide de lumière selon la revendication 4, **caractérisé en ce que** la rainure (6) est comprise dans un plan perpendiculaire ou sensiblement perpendiculaire à la direction de propagation d'un faisceau lumineux au niveau de l'extrémité libre (4) du guide de lumière (2).

6. Guide de lumière selon l'une des revendications 1 à 5, **caractérisé en ce que** la section transversale du guide de lumière (2) est de forme circulaire ou sensiblement circulaire au niveau de son extrémité libre (4).

7. Guide de lumière selon l'une des revendications 1 à 6, **caractérisé en ce que** le matériau opaque est un matériau absorbant la lumière, choisi parmi les polymères thermoplastiques teintés, les élastomères opacifiés, les résines thermodurcissables chargées de pigments absorbants, ou les composites à matrice polymère contenant des charges absorbantes.

8. Planche de bord (14) pour véhicule automobile **caractérisée en ce qu'**elle comprend un guide de lumière (2) selon l'une des revendications 1 à 7.

9. Véhicule automobile **caractérisé en ce qu'**il comprend un guide de lumière selon l'une des revendications 1 à 7.

10. Procédé de fabrication d'un guide de lumière selon l'une des revendications 1 à 7, **caractérisé en ce qu'**il met en œuvre une étape de recouvrement d'une extrémité libre d'un guide de lumière par un matériau liquide, puis une étape de solidification du matériau liquide, le matériau liquide étant opaque lorsqu'il est à l'état solide.
